# EUROPEAN PATENT SPECIFICATION

(11) **EP 3 967 124 B1**
(45) Date of publication and mention of the grant of the patent: **18.09.2024**
(21) Application number: 19928459.7
(22) Date of filing: 10.05.2019
(51) Int. Cl.: A01D 34/00, A01D 34/68, A01D 34/78

(54) **POWER-ASSISTED WORK MACHINE WITH CUTTING BLADE**
KRAFTUNTERSTÜTZTE ARBEITSMASCHINE MIT SCHNEIDKLINGE
MACHINE DE TRAVAIL ÉLECTRIQUE AVEC LAME DE COUPE

(43) Date of publication of application: 16.03.2022
(73) Proprietor: KAAZ Corporation, Okayama 704-8588 (JP)
(72) Inventor: NONAKA, Masaki, Okayama-shi, Okayama 704-8588 (JP); HIRAMATSU, Shinya, Okayama-shi, Okayama 704-8588 (JP); OGAWA, Koichi, Okayama-shi, Okayama 704-8588 (JP)
(74) Representative: Herrero & Asociados, S.L.
(86) International application number: PCT/JP2019/018802
(87) International publication number: WO 2020/230208

(56) References cited:
- EP-A1- 3 210 451
- EP-A2- 0 585 021
- WO-A1-2018/021427
- JP-A- 2001 046 784
- JP-A- 2007 222 026
- JP-A- 2007 222 026
- US-A- 4 995 227

## Description

### TECHNICAL FIELD

The present invention relates to control for reducing electric power consumption in an electric work machine with cutting blade which includes a cutting blade, in which the cutting blade is driven by an electric motor.

### BACKGROUND

Conventionally, lawn mowers and grass cutters are used for mowing lawn and grass. Among these work machines, machines are known which include a cutting blade arranged in the horizontal direction, in which the cutting blade is rotated by a driving source, with an engine or an electric motor being used as the driving source of the cutting blade. For example, in a walk-behind grass cutter disclosed in Patent Literature 1, an electric motor 8 is used as the driving source of front and rear wheels and a cutting blade that rotates around the axial center thereof in the vertical direction.

The aforementioned walk-behind grass cutter includes a cutting-blade-system power transmission path 50 composed of a transmission shaft 53 connected to an output shaft 47 of the electric motor 8 via a coupling 52, and a cutting blade clutch 54 that transmits motive power from the transmission shaft 53 to a cutting blade drive shaft 48 in an engageable/disengageable manner (see Fig. 1 of Patent Literature 1). According to this configuration, when the cutting blade clutch 54 is engaged during mowing, rotation of the output shaft 47 of the electric motor 8 is transmitted to a cutting blade 6 via the cutting blade clutch 54, and the cutting blade 6 is rotationally driven.

Further electric work machines are known from EP 3 210 451 A1 and JP 2007 222026 A. 1

### Citation List

### Patent Literature

Patent Literature 1: Japanese Patent Application Laid-open No. 2014-239660

### SUMMARY

In a case where an electric motor is used as a driving source, as in the walk-behind grass cutter described in Patent Literature 1, enabling operation for an extended period with one charging of the battery is a problem. In such a case, it is difficult to mount a large battery in a work machine in which the machine body is moved while the operator is walking, as in the case of a walk-behind grass cutter, and consequently there is a need to reduce electric power consumption in order to enable operation for an extended period.

The present invention solves the conventional problem described above, and an object of the present invention is to provide an electric work machine with cutting blade that can enable operation for an extended period without making the battery a large size.

To achieve the above object, an electric work machine in accordance with claim 1 is suggested.

According to the electric work machine with cutting blade of the present invention, since an abrupt increase in current at a moment at which the clutch is engaged can be eliminated and electric power consumption can be reduced, operation for an extended period can be enabled without making the battery a large size.

The advantageous effects of the present invention are as described above, and since an abrupt increase in current at a moment at which the clutch is engaged can be eliminated and electric power consumption can be reduced, operation for an extended period can be enabled without making the battery a large size.

### BRIEF DESCRIPTION OF THE DRAWINGS

Fig. 1 is an external perspective view of an electric work machine with cutting blade according to one embodiment of the present invention;
Fig. 2 is a perspective view illustrating the inside of a motor box of the electric work machine with cutting blade illustrated in Fig. 1;
Fig. 3 is a perspective view illustrating the electric work machine with cutting blade illustrated in Fig. 1 when viewed from a handle side;
Fig. 4 is a perspective view illustrating the electric work machine with cutting blade illustrated in Fig. 1 as viewed from the underside;
Fig. 5 is a cross-sectional view illustrating the structure of a clutch arranged inside a housing deck of the electric work machine with cutting blade illustrated in Fig. 1;
Fig. 6 is an enlarged view of the clutch illustrated in Fig. 5, and is a cross-sectional view illustrating a state in which the clutch is disengaged;
Fig. 7 is an enlarged view of the clutch illustrated in Fig. 5, and is a cross-sectional view illustrating a state in which the clutch is engaged;
Fig. 8 is a block diagram illustrating control of an electric motor by controller relating to one embodiment of the present invention;
Fig. 9 is an external perspective view illustrating the vicinity of a clutch lever and a clutch operation detection sensor relating to one embodiment of the present invention;
Fig. 10 is a flowchart illustrating a process from starting operation until ending operation in the electric work machine with cutting blade relating to one embodiment of the present invention;
Fig. 11 is a view illustrating waveforms of a current I and a voltage V of an electric motor with respect to a Comparative Example; and
Fig. 12 is a view illustrating waveforms of a current I and a voltage V of an electric motor with respect to an Example of the present invention.

### DETAILED DESCRIPTION OF THE EMBODIMENTS

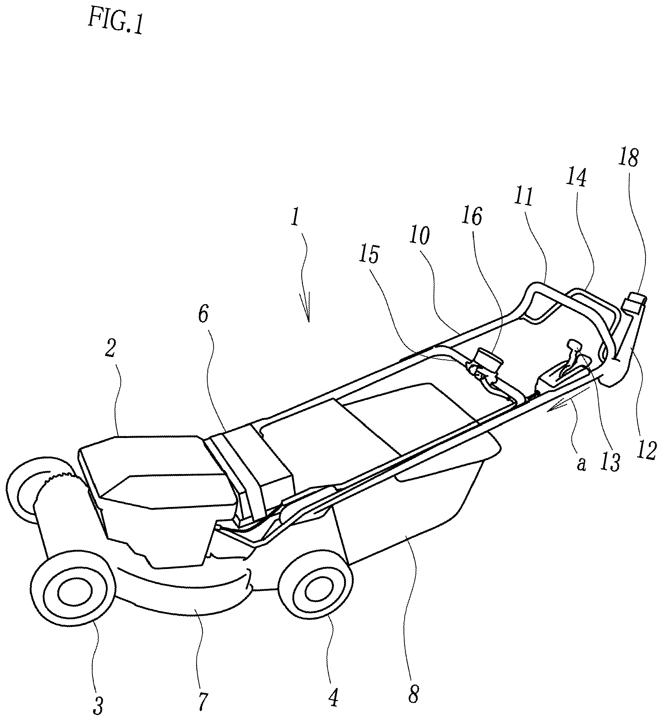

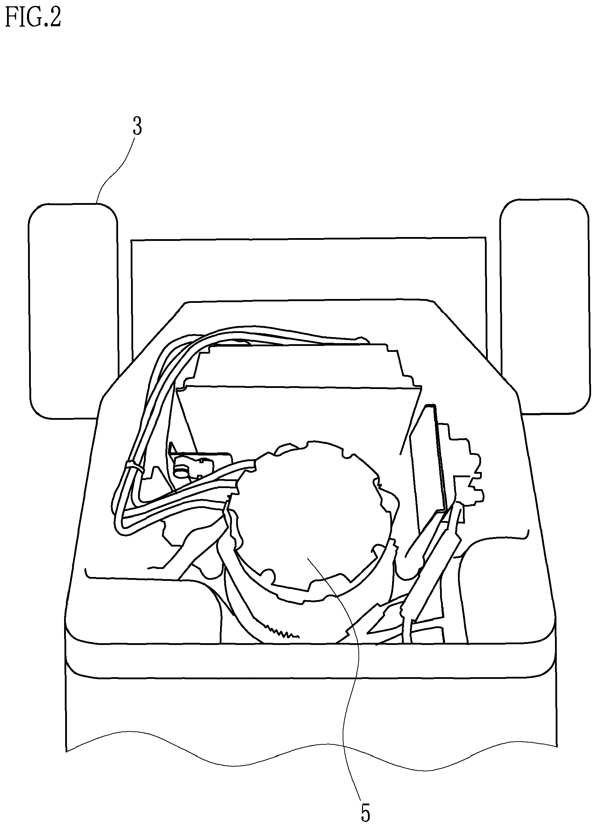

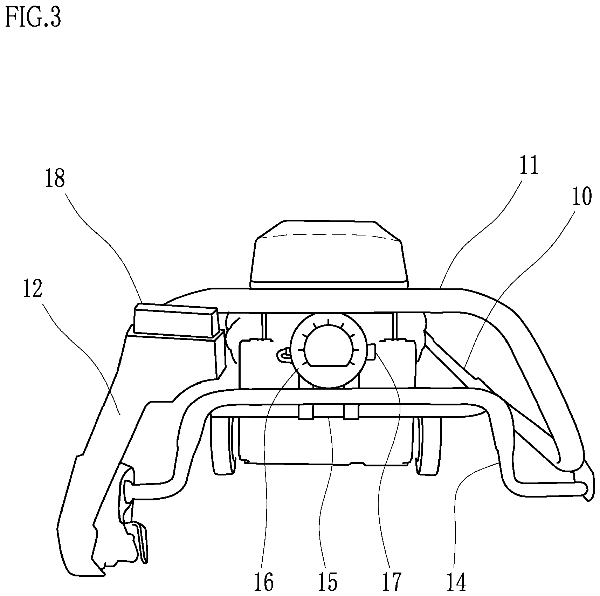

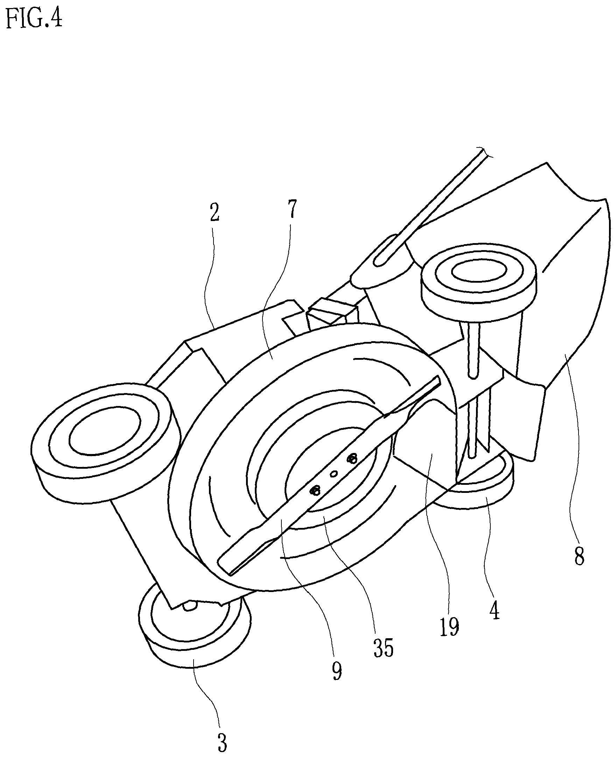

Hereunder, one embodiment of the present invention will be described with reference to the drawings. Fig. 1 is an external perspective view of an electric work machine with cutting blade 1 (hereinafter, referred to simply as "work machine 1") relating to one embodiment of the present invention. Fig. 2 is a perspective view illustrating the inside of a motor box 2. Fig. 3 is a perspective view of the work machine 1 when viewed from a handle side. Fig. 4 is a perspective view of the work machine 1 as viewed from the underside.

Although in the present embodiment the work machine 1 is described using an example of a walk-behind lawn mower, as will be described later, the present invention relates to control of an electric motor that rotationally drives a cutting blade via a clutch, and it suffices that the object for application of this control has a similar cutting blade rotation mechanism as the work machine 1, and for example the object for application of this control may be a riding lawn mower or a grass cutter.

First, a general outline of the work machine 1 will be described with reference to Fig. 1 to 4. In Fig. 1, front wheels 3 are attached to the front of the motor box 2, and rear wheels 4 are attached to the rear. As illustrated in Fig. 2, an electric motor 5 is mounted inside the motor box 2. The rear wheels 4 and a cutting blade 9 (see Fig. 4) are rotationally driven by the electric motor 5. In Fig. 1, a battery 6 which is a power source for the electric motor 5 is mounted at the rear of the motor box 2.

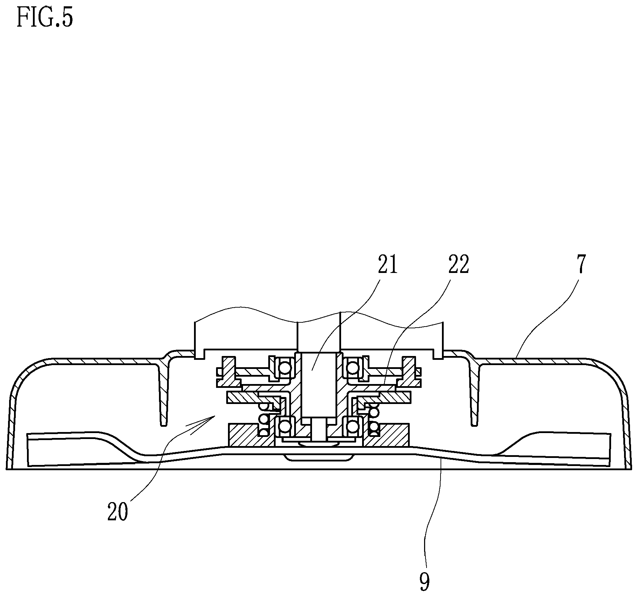

A housing deck 7 is provided below the motor box 2, and a grass bag 8 is attached to the rear of the housing deck 7. As illustrated in Fig. 4, the cutting blade 9 is arranged inside the housing deck 7. As will be described in detail later, rotation of the electric motor 5 is transmitted to the cutting blade 9 via a clutch 20 (see Fig. 5), whereby the cutting blade 9 rotates. A disk with fins 35 rotates integrally with the rotation of the cutting blade 9, and a flow of air is generated from the housing deck 7 to the grass bag 8. As a result, grass cut by the rotation of the cutting blade 9 is sent to the grass bag 8 through an outlet 19, and thereby collected in the grass bag 8.

The work machine 1 is a machine that is used by an operator while walking. In Fig. 1, operating rods 10 are attached to the machine body, and an operation handle 11, a clutch lever 12 (operation means for the clutch), and a shift lever 13 are attached to an end of the operating rods 10. Further, a frame 15 is arranged so as to extend between the pair of operating rods 10, and a display 16 that displays the rotation speed or the like of the electric motor 5 is fixed to the frame 15. As illustrated in Fig. 3, a main switch 17 is attached to the display 16, and the main power source can be turned on by rotating the main switch 17.

In Fig. 1, in a state in which the main power source has been turned on, the electric motor 5 can be started by sliding the shift lever 13 (in the arrow "a" direction), and the speed of rotation of the electric motor 5 can be gradually increased. An operation lever 14 is attached in the vicinity of the operation handle 11, and by operation of the operation lever 14 in a state in which the electric motor 5 is rotating, the rear wheels 4 are driven and the work machine 1 moves forward.

Even if the electric motor 5 is rotating, rotational driving of the cutting blade 9 is stopped unless the clutch lever 12 is operated, and when lawn mowing is to be performed, it is necessary to operate the clutch 20 (see Fig. 5) using the clutch lever 12 to switch from a state in which the clutch 20 is disengaged in which motive power of the electric motor 5 is not transmitted to the cutting blade 9 to a state in which the clutch 20 is engaged in which motive power of the electric motor 5 is transmitted to the cutting blade 9.

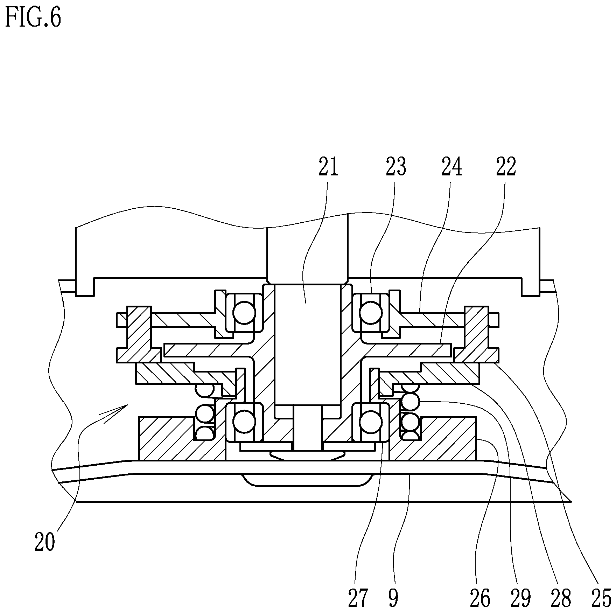

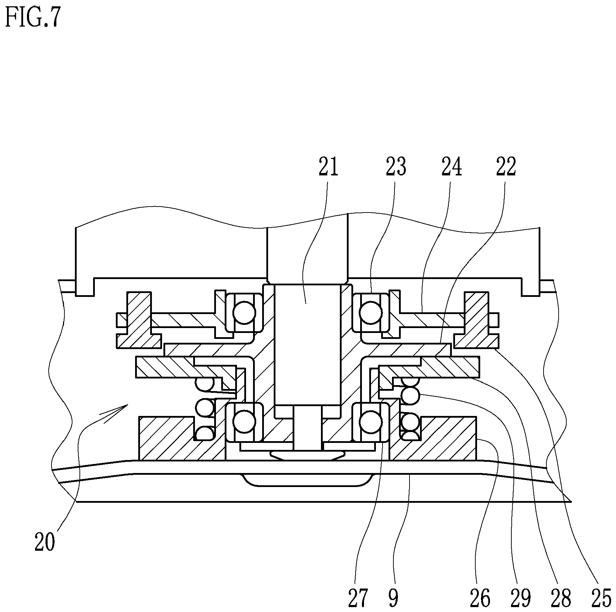

Hereunder, operation of the clutch 20 will be described while referring to Fig. 5 to Fig. 7. Fig. 5 is a cross-sectional view illustrating the structure of the clutch 20 that is arranged inside the housing deck 7. Fig. 6 and Fig. 7 are enlarged views of the clutch 20. Fig. 6 illustrates a state in which the clutch 20 is disengaged, and Fig. 7 illustrates a state in which the clutch 20 is engaged.

As illustrated in Fig. 5, the clutch 20 is arranged inside the housing deck 7, and a motor shaft 21 of the electric motor 5 (see Fig. 2) that is arranged on the upper side of the housing deck 7 is connected to a drive disk 22. The motor shaft 21 and the drive disk 22 are connected by a key (not illustrated), and the drive disk 22 also rotates integrally with the rotation of the motor shaft 21.

In Fig. 6, a brake disc support plate 24 is attached to the motor shaft 21 via an upper-side bearing 23. An annular brake disc 25 is attached to the brake disc support plate 24 so as to be movable in the vertical direction. In this configuration, even if the motor shaft 21 rotates, because the upper-side bearing 23 is interposed between the motor shaft 21 and the brake disc support plate 24, the brake disc support plate 24 and the brake disc 25 that is integrated with the brake disc support plate 24 do not rotate.

The cutting blade 9 is fixed to the lower side of a blade holder 26, and a lower-side bearing 27 is interposed between the blade holder 26 and the drive disk 22. A friction plate 28 is connected to the upper side of the blade holder 26 in a turn-stopping fashion so as to be vertically slidable, and when the friction plate 28 rotates, the blade holder 26 and the cutting blade 9 rotate integrally with the friction plate 28.

A spring 29 is interposed between the blade holder 26 and the friction plate 28, and the friction plate 28 slides in the vertical direction as the spring 29 expands and contracts. In the state illustrated in Fig. 6, the friction plate 28 is pressed by the brake disc 25 and caused to slide downward, and the spring 29 is contracted. Therefore, the friction plate 28 is separated from the drive disk 22. This state is a state in which the clutch 20 is disengaged, and even if the drive disk 22 rotates integrally with rotation of the motor shaft 21, the rotation of the drive disk 22 is not transmitted to the friction plate 28, and the cutting blade 9 does not rotate either.

In contrast, the state illustrated in Fig. 7 is a state in which the pressing of the friction plate 28 by the brake disc 25 has been released, and as a result the spring 29 extends and the friction plate 28 presses the drive disc 22 due to the repulsive force of the spring 29. This state is a state in which the clutch 20 is engaged, and thus rotation of the drive disk 22 is transmitted to the friction plate 28, and the cutting blade 9 rotates to enable lawn mowing.

The work machine 1 includes a switching mechanism (not illustrated) that switches between a state in which the brake disc 25 is pushed down to the lower side to disengage the clutch 20 (state in Fig. 6), and a state in which the disengaged state of the clutch 20 has been released and the clutch 20 is engaged (state in Fig. 7). This switching mechanism is operated by operating the clutch lever 12 (see Fig. 1).

In Fig. 1, when the clutch lever 12 is tilted to the front side in a state in which an operation button 18 at the upper portion of the clutch lever 12 is pressed, the switching mechanism is activated and the state in which the brake disc 25 is pushed down to the lower side is released, the friction plate 28 presses the drive disk 22 as illustrated in Fig. 7, and the clutch 20 enters an engaged state and the cutting blade 9 rotates. The cutting blade 9 rotates as long as the state in which the operation button 18 is pressed and the clutch lever 12 is tilted to the front side is maintained, but when the operator's hand separates from the clutch lever 12, the clutch lever 12 returns to its original state, and the clutch 20 enters a disengaged state and rotation of the cutting blade 9 stops.

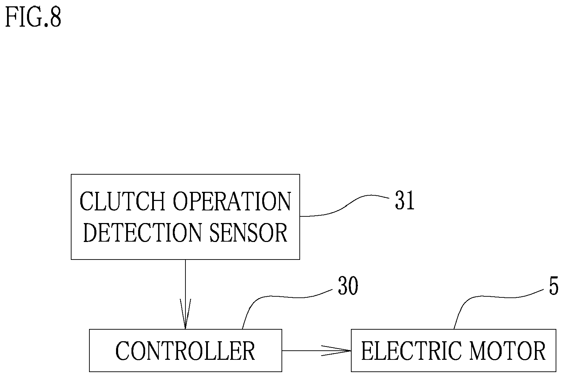

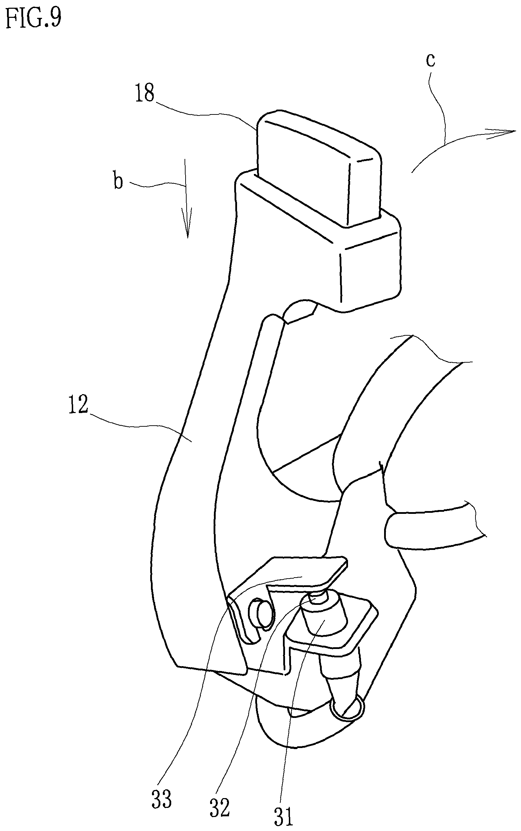

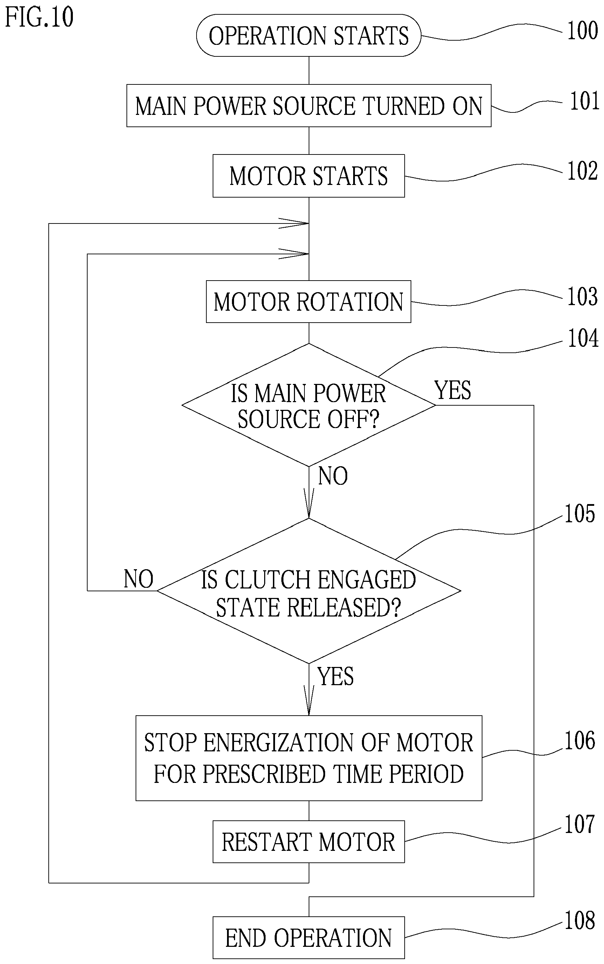

The work machine 1 has built-in controller 30 (a computer) for controlling the operation of the electric motor 5. The control of the electric motor 5 by the controller 30 is described below. Fig. 8 is a block diagram illustrating control of the electric motor 5 by the controller 30, Fig. 9 is an external perspective view illustrating the vicinity of the clutch lever 12 and a clutch operation detection sensor 31, and Fig. 10 a flowchart illustrating a process from starting operation until ending operation.

In Fig. 8, a signal from the clutch operation detection sensor 31 is input to the controller 30, and the controller 30 controls the operation of the electric motor 5 in response to this signal. As illustrated in Fig. 9, the clutch operation detection sensor 31 is provided below the clutch lever 12. The clutch operation detection sensor 31 includes a detection button 32, and in the state illustrated in Fig. 9 (state in which the clutch lever 12 is not operated), the detection button 32 is pressed by a pressing plate 33 that is fixed to the clutch lever 12.

In Fig. 9, by pressing the operation button 18 (arrow b direction) and tilting the clutch lever 12 forward (arrow c direction), the state in which the clutch 20 is disengaged is released, and the clutch 20 enters an engaged state from the disengaged state. Since the pressing plate 33 moves in a direction away from the detection button 32 integrally with the movement of the clutch lever 12, the detection button 32 that had been pressed by the pressing plate 33 rises upward, and the signal value that is output from the clutch operation detection sensor 31 changes.

That is, by setting the positional relationship between the clutch operation detection sensor 31 and the pressing plate 33 so that the detection button 32 rises upward when the state in which the clutch 20 is disengaged is released, the signal value of the clutch operation detection sensor 31 when the state changes becomes a signal value indicating that the disengaged state of the clutch 20 has been released, and it is thus possible for the controller 30 to recognize the release of state in which the clutch 20 is disengaged.

Hereunder, operations from the start of operation of the work machine 1 to the end of operation thereof are described while referring to Fig. 10. In Fig. 10, when starting operation (step 100), the main power source is turned on (step 101) by rotating the main switch 17 (see Fig. 3). By sliding the shift lever 13 (see Fig. 1) in this state, the electric motor 5 is started (step 102), and the electric motor 5 rotates (step 103). In this state, in Fig. 1, by operating the operation lever 14, the rear wheels 4 are driven and the work machine 1 moves forward.

On the other hand, as long as the clutch lever 12 (see Fig. 1) is not operated, the clutch 20 is in a disengaged state and the cutting blade 9 does not rotate, and in order to cause the cutting blade 9 to rotate it is necessary to release the state in which the clutch 20 is disengaged by operating the clutch lever 12 to engage the clutch 20. As described above, in Fig. 8, a signal from the clutch operation detection sensor 31 is input to the controller 30, and the controller 30 can recognize the release of the disengaged state of the clutch 20. Upon recognizing the release of the state in which the clutch 20 is disengaged (step 105 in Fig. 10), the controller 30 stops the energization of the electric motor 5 (stops the rotational driving) during a period from the time of recognizing the release until a prescribed time period elapses (step 106 in Fig. 10).

This control is control that stops energization of the electric motor 5 during a period that includes the moment at which the clutch 20 is engaged, and it suffices that the period of stopping energization of the electric motor 5 includes the moment at which the clutch 20 is engaged. Although in the present embodiment the rotation of the electric motor 5 stops during a period from when the disengaged state of the clutch 20 is released until a prescribed time period elapses, since a period from release of the disengaged state of the clutch 20 until the clutch 20 is engaged is a momentary period, even if the prescribed time period is a very small time period of about 0.5 seconds, the moment at which the clutch 20 is engaged will be included in the period in which rotation of the electric motor 5 is stopped.

Whilst the prescribed time period for which rotation of the electric motor 5 is stopped is not particularly limited, for example the prescribed time period is within the range of 0.5 to 1 second. After the prescribed time period elapses, the controller 30 restarts the electric motor 5 (step 107), and the electric motor 5 rotates once more (step 103). In this state, the clutch 20 is in an engaged state, and the cutting blade 9 rotates due to the rotation of the electric motor 5.

Thereafter, rotation of the electric motor 5 continues even when a state is entered in which the clutch 20 is disengaged, and when the state in which the clutch 20 is disengaged is released, although rotation of the electric motor 5 stops for a prescribed time period, after the prescribed time period elapses the electric motor 5 is restarted and thus the rotation of the electric motor 5 resumes (step 105 to step 107). When the work is finished, the main power source is turned off (step 104), and operation is ended (step 108).

As a result of repeated experiments conducted by the inventors of the present application in order to achieve a reduction in the electric power consumption, the operation control of the electric motor 5 when the clutch 20 is operated as described above has been derived based on the finding that a change in the current at the moment at which the clutch 20 is engaged is large. Hereunder, the present invention is described more specifically while referring to measurement results obtained with respect to a Comparative Example and an Example.

In the Comparative Example, although the basic structural configuration of the work machine is the same as the work machine 1 according to the above embodiment, the Comparative Example has a configuration so that control that stops energization of the electric motor 5 (hereinafter, referred to as "energization stopping control") is not executed during a period from when the disengaged state of the clutch 20 is released until a prescribed time period elapses. That is, rotation of the electric motor 5 continues irrespective of the operation of the clutch 20. The Example is configured so that energization stopping control is added to the configuration of the Comparative Example. With respect to the Comparative Example and the Example, a voltage measuring probe and a current measuring probe were connected thereto, and voltage values and current values were measured chronologically using a data logger.

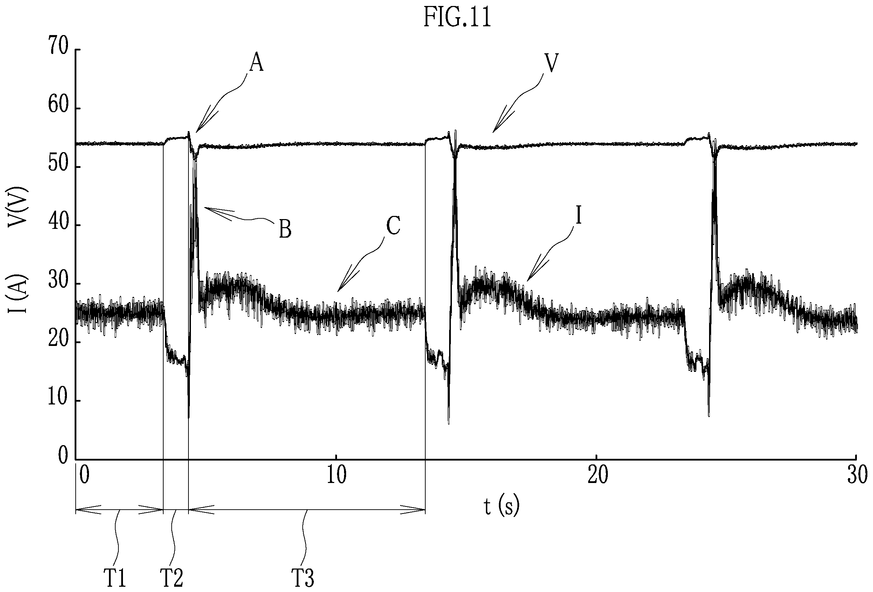

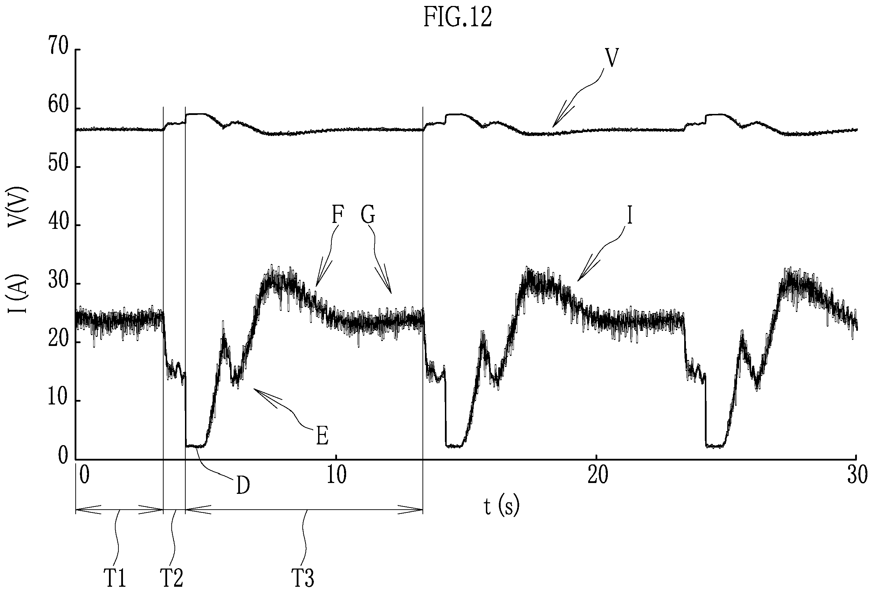

For the Comparative Example and the Example, the period of one cycle was set to 10 seconds, with an engaged state of the clutch 20 being set to 9 seconds, and a disengaged state of the clutch 20 being set to 1 second. Fig. 11 illustrates waveforms of a current I and a voltage V of the electric motor 5 with respect to the Comparative Example. The abscissa axis represents the elapsed time t (s), and the ordinates axis is used to represent both the current I (A) and the voltage V (V) (the same applies with respect to Fig. 12).

In Fig. 11 that relates to the Comparative Example, during a period T1 after the start of measurement, the clutch 20 is in an engaged state and the cutting blade 9 is rotating. During a period T2 (period of 1 second) that follows the period T1, the clutch 20 is in a disengaged state, and although rotation of the electric motor 5 continues, rotation of the cutting blade 9 is stopped. In the period T2, the voltage V is rising and the current I is falling. In a period T3 (period of 9 seconds) that follows the period T2, the clutch 20 is in an engaged state. At the beginning of the period T3, the voltage V drops (A part) and the current I rises sharply (B part). It is considered that this is because the load increased suddenly due to the clutch 20 being engaged. Thereafter, the current I falls and eventually stabilizes (C part).

In Fig. 12 that relates to the Example, although the waveforms of the current and voltage in the period T1 and the period T2 are the same as in Fig. 11 relating to the Comparative Example, the waveforms in the period T3 differ significantly between Fig. 11 and Fig. 12. In Fig. 12, the current value falls to the vicinity of zero at the beginning of the period T3 (D part). This is because energization stopping control was executed, and energization of the electric motor 5 was stopped. It is surmised that the reason the current value did not become completely zero was because of energization of the sensors and the characteristics of the three-phase motor. The energization stop time was set to 0.5 seconds, and upon 0.5 seconds elapsing from the time that energization of the electric motor 5 was stopped, the electric motor 5 restarted and simultaneously the cutting blade 9 also rotated. After restarting, the current rises as a whole (E part), and thereafter falls (F part), and eventually stabilizes (G part).

Comparing Fig. 11 relating to the Comparative Example and Fig. 12 relating to the Example, since the abrupt increase in current in the period T3 in Fig. 11 relating to the Comparative Example is not observed in Fig. 12 relating to the Example, a reduction in electric power consumption is expected in the Example in comparison to the Comparative Example. In order to confirm the electric power consumption reduction effect, the operating time from when the battery was fully charged until the electric motor 5 stopped due to battery discharge was measured for each of the Comparative Example and the Example. Similarly to the above experiment, one cycle was set to 10 seconds, with an engaged state of the clutch 20 being set to 9 seconds, and a disengaged state of the clutch 20 being set to 1 second. The results of the experiment are shown in Table 1 below.

**[Table 1]**

| | Number of Cycles | Operating Time |
|---|---|---|
| Comparative Example | 309 cycles | 51 mins, 30 secs |
| Example | 434 cycles | 72 mins, 20 secs |

According to the results shown in Table 1, while the number of cycles in the Comparative Example was 309, the number of cycles in the Example was 434, which showed that the number of cycles in the Example increased by 40% (the operating time increased by 40%) compared to the Comparative Example, and thus the effect of reducing the electric power consumption could be confirmed. According to this result, it can be understood that an abrupt increase in current at the moment at which the clutch 20 is engaged is a major factor that increases the electric power consumption. On the other hand, when the electric motor 5 is restarted as in the Example, even though a large load is applied at the time of restarting, the electric power consumption is reduced compared to the Comparative Example. This is because an electric motor has a characteristic of generating a large torque when starting, and it is considered that restarting of the electric motor 5 is not a factor that greatly increases the electric power consumption.

Therefore, according to the present invention, since an abrupt increase in the current at a moment at which the clutch 20 is engaged can be eliminated and electric power consumption can be reduced, operation for an extended period can be enabled without making the battery a large size.

Further, since the effect of reducing the electric power consumption is obtained by suppressing an abrupt increase in the current at a moment at which the clutch 20 is engaged, the effect of reducing the electric power consumption increases as the frequency of engaging and disengaging the clutch 20 increases. In this regard, since a walk-behind lawn mower as illustrated in Fig. 1 is used in a narrow area, the frequency of engaging and disengaging the clutch 20 is high, and hence electric power consumption can be reduced more effectively.

Whilst an embodiment of the present invention has been described above, the above embodiment is an example and may be appropriately modified. For example, although in the above embodiment the clutch lever 12 is used as operation means for operating the clutch 20, as long as the clutch 20 can be operated, the operation means is not limited to a lever structure.

Furthermore, although in the above embodiment the detection of release of a state in which the clutch 20 is disengaged is detection that is based on a change in a signal value that is output from the clutch operation detection sensor 31 as a result of operation of the clutch lever 12, it suffices that the release of a state in which the clutch 20 is disengaged can be detected, and another method may be adopted as the detection method.

In addition, although the energization stopping control adopted in the above embodiment is control that stops energization of the electric motor 5 when a state in which the clutch 20 is disengaged is released, an energization stopping period is not limited thereto, and it suffices that energization is stopped at least at the moment at which the clutch 20 is engaged.

### Reference Signs List

1 electric work machine with cutting blade
3 front wheel
4 rear wheel
5 electric motor
9 cutting blade
12 clutch lever (operation means for clutch)
18 operation button
20 clutch
22 drive disk
28 friction plate
30 controller
31 clutch operation detection sensor

## Claims

1. An electric work machine (1) with cutting blade, comprising:
a cutting blade (9);
an electric motor (5) that rotationally drives the cutting blade (9);
a clutch (20) configured to engage and disengage motive power between the electric motor (5) and the cutting blade (9);
operation means (12) configured for operating the clutch (20) such as to switch between a state in which the clutch (20) is disengaged and motive power of the electric motor (5) is not transmitted to the cutting blade (9) and a state in which the clutch (20) is engaged and motive power of the electric motor (5) is transmitted to the cutting blade (5);
a sensor (31) configured to detect movement of the operation means (12); and
a controller (30) configured to control operation of the electric motor (5) and recognise release of the w state in which the clutch (20) is disengaged based on a signal from the sensor (31),
wherein the controller (30) is configured to stop rotation of the electric motor (5) during a period that includes a moment at which the clutch (20) is engaged by stopping energization of the electric motor (5) after the state, in which the clutch (20) is disengaged is released, and restarting the electric motor (5) after a prescribed time period elapses after stopping the energization.

## Patentansprüche

1. Eine elektrische Arbeitsmaschine (1) mit einem Schneideblatt, die Folgendes umfasst:
Ein Schneideblatt (9);
einen Elektromotor (5), der drehend das Schneideblatt (9) antreibt;
eine Kupplung (20), die konfiguriert ist, um die Antriebskraft zwischen dem Elektromotor (5) und dem Schneideblatt (9) einzukuppeln und auszukuppeln;
Betriebsmittel (12), die konfiguriert sind, um die Kupplung (20) so zu betätigen, dass sie schaltet zwischen einem Zustand, in dem die Kupplung (20) ausgekuppelt ist und die Antriebskraft des Elektromotors (5) nicht auf das Schneideblatt (9) übertragen wird und einem Zustand, in dem die Kupplung (20) eingekuppelt ist und die Antriebskraft des Elektromotors (5) zunm Schneideblatt (5) übertragen wird;
einen Sensor (31), der konfiguriert ist, um Bewegungen der Betriebsmittel (12) zu erfassen und
ein Steuergerät (30), das konfiguriert ist, um den Betrieb des Elektromotors (6) zu steuern und die Freigabe des Zustandes, in dem die Kupplung ausgekuppelt ist, zu erkennen, basierend auf einem Signal des Sensors (31),
wobei das Steuergerät (30) konfiguriert ist, um die Drehung des Elektromotors (5) während eines Zeitraumes zu stoppen, der einen Moment einschliesst, in dem die Kupplung (20) durch Abschalten der Erregung des Elektromotors eingekuppelt wird und freigegeben wird, nach dem Zustand, in dem die Kupplung (20) ausgekuppelt ist, und erneutes Starten des Elektromotors (5) nach Ablauf eines vorbestimten Zeitraumes nach Anhalten der Erregung.

## Revendications

1. Une machine de travail électrique (1) avec une lame de coupe, comprenant ce qui suit :
une lame de coupe (9) ;
un moteur électrique (5) qui entraîne en rotation la lame de coupe (9) ;
un embrayage (20) configuré pour embrayer et débrayer la force d'entraînement entre le moteur électrique (5) et la lame de coupe (9) ;
un moyen d'actionnement (12) configuré pour opérer l'embrayage (20) de manière à le faire commuter entre un état dans lequel l'embrayage (20) est débrayé et la force motrice du moteur électrique (5) n'est pas transmise à la lame de coupe (9) et un état dans lequel l'embrayage (20) est embrayé et la force motrice du moteur électrique (5) est transmise à la lame de coupe (5) ;
un capteur (31) configuré pour détecter les mouvements des moyens d'actionnement (12) ;
et
un dispositif de contrôle (30) configuré pour contrôler le fonctionnement du moteur électrique (5) et détecter la libération de l'état dans lequel l'embrayage (20) est débrayé sur la base d'un signal provenant du capteur (31),
dans lequel le contrôleur (30) est configuré pour arrêter la rotation du moteur électrique (5) pendant une période de temps comprenant un moment où l'embrayage (20) est engagé en arrêtant l'alimentation du moteur électrique (5) après l'état dans lequel l'embrayage (20) est désengagé, et pour redémarrer le moteur électrique (5) après l'écoulement d'une période de temps prescrite après l'arrêt de l'alimentation.
